# EUROPEAN PATENT SPECIFICATION

(11) **EP 0 585 898 B1**
(45) Date of publication and mention of the grant of the patent: **05.08.1998**
(21) Application number: 93113976.0
(22) Date of filing: 01.09.1993
(51) Int. Cl.: B01J 41/14, B01J 41/04, C08F 226/02

(54) **Process for the production and use of an anion exchange resin**
Verfahren zur Herstellung und Verwendung eines Anionen- austauscherharzes
Procédé de fabrication et utilisation d'une résine échangeuse d' anions

(30) Priority: 04.09.1992 JP 237029/92; 04.03.1993 JP 43955/93; 27.04.1993 JP 101119/93
(43) Date of publication of application: 09.03.1994
(73) Proprietor: Mitsubishi Chemical Corporation, Chiyoda-ku Tokyo (JP)
(72) Inventor: Ito, Tsuyoshi, Machida-shi, Tokyo (JP); Kubota, Hirohisa, Machida-shi, Tokyo (JP); Kashigawi, Takashi, Machida-shi, Tokyo (JP)
(74) Representative: TER MEER STEINMEISTER & PARTNER GbR

(56) References cited:
- EP-A- 0 417 361
- DE-B- 1 151 120
- GB-A- 744 386
- GB-A- 805 853
- US-A- 2 561 695
- US-A- 3 709 977
- J. OF APPLIED CHEM. OF THE USSR vol. 55, no. 3 , March 1982 pages 506 - 510 LASKORIN 'SYNTHESIS OF ANION-EXCHANGE RESINS OF THE IMIDAZOLE TYPE'

## Description

The present invention relates to an anion exchange resin, a process for its production and its use. Particularly, the present invention relates to a spherical anion exchange resin having a large exchange capacity. Further, the present invention relates to a method for adsorbing and removing ions, coloring organic contaminants or silica in an aqueous solution, or adsorbing and removing acidic compounds in a gas, by means of such a resin.

Anion exchange resins are used in large amounts in various industrial fields. One of their main uses is for water treatment i.e. for adsorption and removal of ions and substances dissociable into ions in water. Use of anion exchange resins is indispensable for the preparation of water for boilers or for the preparation of pure water or ultra-pure water useful in various industrial fields. One of other main uses is for removal of organic coloring contaminants in an aqueous solution, i.e. for purification of a colored solution. Another main use is for purification of various chemical products including various pharmaceuticals.

Anion exchange resins commonly employed heretofore have a crosslinked polystyrene structure and are prepared by introducing chloromethyl groups to a styrenedivinylbenzene crosslinked copolymer and then reacting an amine thereto. These resins are chemically stable, since their skeletons are all made of carbon-carbon bonds. However, at least one benzene ring is present per functional group, whereby the ion exchange capacity is small. For example, the ion exchange capacity of a weakly basic anion exchange resin having dimethylaminomethyl groups introduced to a styrenedivinylbenzene crosslinked copolymer, can not exceed 6.2 meq/g theoretically. If it is possible to introduce a plurality of dimethylaminomethyl groups per benzene ring, a resin having a larger ion exchange capacity will be produced, but no such a technology has yet been developed which can be used in industry.

The ion exchange capacity of a strongly basic anion exchange resin wherein functional groups are quaternary ammonium groups, is naturally smaller.

Another drawback of such polystyrene-type anion exchange resins is that the amination of chloromethyl groups will not completely proceed, whereby chloromethyl groups will remain in the formed anion exchange resins. During the use of the resins, such chloromethyl groups will decompose and discharge chloride ions. In the purification for cooling water for a nuclear reactor, such chloride ions desorbed in water are likely to bring about corrosion of the apparatus, and they must be strictly controlled.

Still another drawback of the polystyrene-type anion exchange resins is that since they contain highly hydrophobic benzyl groups in large amounts, organic substances are likely to be non-specifically adsorbed on the resins, and the adsorbed organic substances can hardly be dissociated from the resins. Accordingly, it is likely that the resins will be contaminated with organic substances during the use, whereby the ion exchange capacities will decrease.

In addition to the resins having styrenedivinylbenzene crosslinked copolymers as their skeletons, poly(meth)acrylate-type anion exchange resins and poly(meth)acrylamide-type anion exchange resins are known. However, these resins have their applications rather limited, because ester bonds or amide bonds contained in them are susceptible to decomposition by an acid or an alkali.

Further, basic ion exchange resins have also been proposed which have a structure such that a polyvinyl amine is crosslinked with a crosslinking agent such as divinylbenzene or ethylene glycol dimethacrylate. For example, Example 1 of Japanese Unexamined Patent Publication No. 51007/1986 discloses that N-vinylformamide and divinylbenzene of commercial grade were copolymerized to obtain a bulky polymer, which was then pulverized and hydrolyzed with hydrochloric acid to obtain an anion exchange resin having primary amino groups. The ion exchange capacity of this resin was 18.7 meq/g, which is remarkably larger than the ion exchange capacities of the conventional polystyrene-type anion exchange resins. While, as an ion exchange resin, a spherical product is usually desired from the viewpoint of convenience of handling and use, this resin is a pulverized product of a bulky resin and thus has a poor commercial value. A spherical resin is produced usually by suspension polymerization. However, N-vinylformamide is water-soluble, while divinylbenzene is oil-soluble. Accordingly, it is usually difficult and a special measure is required to produce a copolymer of N-vinylformamide with divinylbenzene by suspension polymerization.

Further, Reactive Polymers, 17, 207-217 (1992) and Eur. Polym. J. 25, 4, 331-340 (1989) discloses that N-vinyl-t-butylcarbamate and divinylbenzene were suspension-polymerized in water to obtain a granular crosslinked copolymer, which was then hydrolyzed to obtain an anion exchange resin having primary amino groups, and the performance of its chelate resin was tested. However, the ion exchange capacity of the resin obtained here was as low as 4.3 meq/g at the highest. The reason for this is that because N-vinyl-t-butylcarbamate has a molecular weight of about 3.7 times that of N-vinyl amine, the weight ratio of the crosslinking agent of the hydrolyzed product is much larger than that of the copolymer, and the degree of hydrolysis is as low as about 80% at the maximum.

DE-A-1151120 reaches formation of a cross-linked ion-exchange resin by reacting a N-vinylimide of a dicarbonacid with compounds containing at least 2 vinyl groups. Formation of anion-exchange resins from N-vinylimidazole using divinyl benzene is described in J. appl. Chem. 55(3) 506-510, Mar 1982.

It is an object of the present invention to provide a spherical anion exchange resin having a large ion exchange capacity.

A further object of the present invention is to provide an anion exchange resin of a structure consisting essentially of a polyvinyl amine crosslinked with divinylbenzene. The amino groups of the polyvinyl amine may be secondary or tertiary amino groups, or quaternary ammonium groups alkylated with methyl groups and/or ethyl groups.

Another object of the present invention is to provide an anion exchange resin having a large ion exchange capacity per unit volume in water.

A further object of the present invention is to provide a process for preparing the above-mentioned anion exchange resin.

A still further object of the present invention is to provide a method for removing coloring organic contaminants from a colored aqueous solution by means of the above-mentioned anion exchange resin.

Another object of the present invention is to provide a method for removing silica in water by means of the above-mentioned anion exchange resin.

A further object of the present invention is to provide a method for removing a specific component in a gas by means of the above-mentioned anion exchange resin.

The present invention provides a method for producing a spherical anion exchange resin having a structure of a crosslinked copolymer consisting essentially of a vinyl amine and divinylbenzene as a crosslinking agent. It provides a process for producing an anion exchange resin being spherical and having the following ion exchange capacity:
(1) an ion exchange capacity of from 8 to 22 meq/g, when amino groups are mainly primary amino groups;
(2) an anion exchange capacity of from 3 to 16 meq/g, when amino groups are mainly secondary or tertiary amino groups; or
(3) a salt splitting capacity of from 1.5 to 8.5 meq/g, when amino groups are mainly quaternary ammonium groups, which comprises dispersing a monomer solution comprising a polymerization initiator and a monomer mixture consisting essentially of from 19 to 98 mol% of N-vinylformamide, from 0.1 to 60 mol% of divinyl benzene and from 0 to 60 mol% of other vinyl compounds copolymerizable therewith, in an organic solvent in which the monomer solution is hardly soluble, in the form of liquid droplets, to form a suspension, heating the suspension to form a crosslinked copolymer of N-vinylformamide with divinylbenzene, hydrolizing the crosslinked copolymer to convert formamide groups to primary amino groups, and when secondary or tertiary amino groups or quaternary ammonium groups are desired as functional groups, methylating or ethylating the primary amino groups.
This resin may further contain other copolymer components in small amounts. For example, the purity of divinylbenzene of commercial grade is about 56.5%, with the rest being ethyltoluene, methylstyrene, ethylstyrene, etc. Accordingly, when divinylbenzene of commercial grade is used as the crosslinking agent, a copolymer necessarily containing ethylstyrene, etc. as copolymer components, will be formed. Otherwise, other copolymer components may be intentionally incorporated. As such copolymer components, styrene, an alkylstyrene, an alkyl (meth)acrylate such as methyl (meth)acrylate, hydroxyethyl (meth)acrylate, ethylene glycol di(meth)acrylate, diethylene glycol di(meth)acrylate, (meth)acrylamide and (meth)acrylonitrile may, for example, be mentioned. Among them, a (meth)acrylate, (meth)acrylamide and (meth)acrylonitrile are readily hydrolyzable, and it is preferred for the copolymer containing these compounds to employ mild reaction conditions for the subsequent hydrolyzing step.

In the anion exchange resin of the present invention, vinyl amine units constitute from 19 to 98 mol%, divinylbenzene units constitute from 0.1 to 60 mol%, and other copolymer units constitute from 0 to 60 mol%. The amino group in a vinyl amine unit may be alkylated by a methyl group or an ethyl group to form a secondary or tertiary amino group, or a quaternary ammonium group. Even when the amino groups are alkylated to secondary or tertiary amino groups, a small amount of primary amino groups will usually remain in the anion exchange resin of the present invention, as ascertained from the NMR spectrum. Further, with the strongly basic anion exchange resin of the present invention, the anion exchange capacity is usually larger than the salt splitting capacity, which indicates that conversion of tertiary amino groups to quaternary ammonium groups do not completely proceed.

Among various recurring units constituting the anion exchange resin of the present invention, the vinyl amine units are units which impart an ion exchange ability to the resin, and the content of such vinyl amine units gives a governing influence over various chemical properties of the resin, such as the ion exchange ability, the ability to adsorb coloring organic contaminants, the ability to adsorb silica and the ability to adsorb a gas. The larger the proportion of such units in the resin, the better. Usually, it is preferred that such units constitute from 40 to 95 mol%. As the proportion of vinyl amine units increases, the proportion of divinylbenzene units as a crosslinking agent necessarily decreases, whereby mechanical strength such as compression strength or cycle strength of the resin tends to be low. Further, when the resin is used for adsorbing ions or coloring organic contaminants, the volume change between before and after the adsorption tends to be large. The most preferred amount of vinyl amine units which satisfies the chemical properties and the physical properties of the anion exchange resin simultaneously, is usually from 60 to 95 mol%, particularly from 70 to 90 mol%.

Divinylbenzene units insolubilyze the resin and impart to the resin mechanical strength, resistance against swelling or contraction and other physical properties. Accordingly, as the proportion of divinylbenzene units increases, the mechanical strength of the resin usually increases, the resin tends not to swell very much in water, and the volume change due to adsorption of ions or coloring organic contaminants tends to be small. A preferred proportion of divinylbenzene is from 1 to 40 mol%. Most preferred from the viewpoint of the chemical and physical properties of the resin, is that the vinyl amine units constitute from 70 to 90 mol%, as mentioned above, and the rest being divinylbenzene units and units derived from e.g. methylstyrene or ethylstyrene unavoidably contained divinylbenzene of commercial grade.

The anion exchange resin of the present invention consists essentially of the above-mentioned vinyl amine units and the divinylbenzene units, and usually there is no other third recurring units, except for ethylbenzene, etc. accompanying the divinylbenzene. However, if desired, third recurring units of e.g. styrene or (meth)acrylate may be present, so that various properties of the anion exchange resin of the present invention can thereby be modified to some extent. It is preferred that such third recurring units are present in an amount of from 0 to 40 mol%.

The ion exchange capacity of the anion exchange resin of the present invention varies depending upon the type of the main functional groups i.e. the functional groups constituting at least 50 mol%. When the main functional groups are primary amino groups, the anion exchange resin of the present invention has an ion exchange capacity of from 8 to 22 meq/g. When secondary or tertiary amino groups are the main functional groups, the anion exchange resin of the present invention has an ion exchange capacity of from 3 to 16 meq/g. When quaternary ammonium groups are the main functional groups, the anion exchange resin of the present invention has a salt splitting capacity of from 1.5 to 8.5 meq/g.

The anion exchange resin of the present invention is spherical, and its diameter is usually from 1 to 2,000 µm. The particle size of the resin may optionally be selected depending upon the particular use of the resin. For example, when it is used for usual water treatment or for purification of a colored solution, the particle size of the resin is selected preferably within a range of from 50 to 2,000 µm, more preferably from 200 to 800 µm. When it is used as a carrier for analytical chromatography, the particle size is selected preferably within a range of from 1 to 300 µm, more preferably from 2 to 50 µm. When it is used as a carrier for a fixed enzyme or cell culture, the particle size is selected preferably within a range of from 100 to 1,000 µm.

Among anion exchange resins of the present invention, the one having primary amino groups as the functional groups, can be prepared by suspension-polymerizing N-vinylformamide and divinylbenzene to obtain a spherical crosslinked copolymer, and then hydrolyzing it to convert the formamide groups to primary amino groups. The one having secondary or tertiary amino groups or quaternary ammonium groups as the functional groups, can be prepared by alkylating primary amino groups of the anion exchange resin prepared as mentioned above.

The copolymerization reaction of N-vinylformaldehyde and divinylbenzene is conducted by suspension polymerization using, as a dispersion medium, an organic solvent having a poor dissolving ability to N-vinylformamide and, as a dispersed phase, a monomer solution comprising N-vinylformamide, divinylbenzene and a polymerization catalyst. As the dispersion medium, an aliphatic, alicyclic or aromatic non-polar hydrocarbon such as benzene, toluene, petroleum ether, hexane, heptane, cyclohexane, isoctane or n-octane, may be employed. Further, a halogenated aliphatic or aromatic hydrocarbon such as dichloroethane, polychloroalkane, chlorobenzene or dichlorobenzene, may also be employed. Preferably, an aliphatic or alicyclic hydrocarbon such as cyclohexane, petroleum ether, hexane, heptane or isoctane, is employed.

A small amount of a dispersion stabilizer is preferably incorporated to the dispersion medium. As such a dispersion stabilizer, an oil-soluble cellulose such as ethyl cellulose, cellulose acetate butylate or ethyl hydroxyethyl cellulose, may be employed. Further, an oil-soluble dispersion stabilizer such as gum arabic, sorbitan sesquioleate, sorbitan monooleate or sorbitan monostearate, may also be employed. The stabilizer is added usually in an amount of from 0.05 to 5.0 weight %, preferably from 0.1 to 2.0 weight % relative to the medium. In a case where divinylbenzene in the monomer solution is likely to migrate into the dispersion medium and polymerize there, an oil-soluble polymerization inhibitor may be added to the dispersion medium. As such a polymerization inhibitor, an aromatic polymerization inhibitor such as phenothiazine, naphthylamine, benzoquinone or 2,2-diphenyl-1-picrylhydrazine, may be employed. Such a polymerization inhibitor is incorporated preferably in an amount within a range of from 0.001 to 0.05% by weight relative to the dispersion medium.

As the polymerization catalyst to be incorporated to the monomer solution, it is preferred to employ an azotype or peroxide-type organic polymerization catalyst. Particularly preferred is a water-soluble polymerization catalyst. For example, a water-soluble azo-type polymerization initiator such as 2,2-azobis-2-amidinopropane hydrochloride or 2,2'-azobis(2-methylpropionamidine)hydrochloride, may be employed. 4,4-azobis-4-cyanovaleric acid may also be employed.

The polymerization initiator is used usually in an amount of from 0.02 to 5.0% by weight, preferably from 0.05 to 2.0% by weight, relative to the polymerizable monomers.

The monomer solution preferably contains a small amount of a polar solvent. As such a polar solvent, dimethylsulfoxide, dimethylformamide or hexamethylphosphoric triamide may, for example, be employed. Such a polar solvent helps dissolution of the catalyst in the monomer solution. Preferably, the catalyst is dissolved in the polar solvent and added to the monomer solution. When a large amount of the polar solvent is added to the monomer solution, the resulting anion exchange resin will be weak in its mechanical strength and apt to swell in water. The amount of such a polar solvent is preferably not more than 50% by weight, especially not more than 10% by weight, relative to the total amount of N-vinylformamide and divinylbenzene.

The copolymerization reaction can be conducted in such a manner that the monomer solution is added to the dispersion medium with stirring to form a suspension having the monomer solution dispersed in the dispersion medium in the form of liquid droplets, and then the suspension is heated and polymerized at the polymerization temperature. The polymerization temperature is usually from 30 to 120°C, and the polymerization time is usually from 1 to 15 hours. The volume ratio of the dispersion medium to the monomer solution is usually in the range of from 1 to 5. If the ratio is less than 1, it is hard to achieve good suspension, and if the ratio is more than 5, the yield and productivity of the copolymer will decrease. If desired, the suspension may be prepared by a method of discharging the monomer solution from a nozzle into the dispersion medium, whereby an anion exchange resin having a uniform particle size can be produced.

The crosslinked copolymer of N-vinylformamide with divinylbenzene thus obtained, is then hydrolyzed to convert formamide groups to primary amino groups and thereby to obtain an anion exchange resin. The hydrolysis may be conducted at a temperature of from 50 to 120°C for from 1 to 20 hours. The hydrolysis may be conducted in an aqueous solution of an acid such as hydrochloric acid, sulfuric acid or phosphoric acid, but it is preferably conducted in an aqueous solution containing an alkali such as sodium hydroxide, potassium hydroxide or calcium hydroxide.

An anion exchange resin having secondary or tertiary amino groups or quaternary ammonium groups, can be obtained by alkylating the primary amino groups of the anion exchange resin thus obtained. For example, by an alkylation by the Eschweiler-Clarke Reaction (hereinafter referred to simply as the EC reaction) using formic acid and formaldehyde as reagents, an anion exchange resin having secondary or tertiary amino groups can be obtained. The alkylation may also be conducted by the method using sodium formate and formaldehyde, as disclosed in J. Org. Chem. 36, p829, 1971. By these methods, even if excess amounts of reagents are employed, it is difficult to bring the alkylation degree of the amino groups to a level of higher than 1.9. The alkylation degree of the anion exchange resin having secondary or tertiary amino groups as major functional groups usually within a range of from 1.6 to 1.9. Here, the alkylation degree is an average number of alkyl groups bonded to one amino group, as calculated from the NMR spectrum, and the alkylation degree of a monomethylamino group is 1 and that of a dimethylamino group is 2.

Further, the alkylation may be conducted by means of an alkylating agent such as dimethyl sulfate, diethyl sulfate, a methyl halide or an ethyl halide. In this case, a small amount of quaternary ammonium groups may be sometimes produced in addition to secondary or tertiary amino groups as major functional groups. Further, it is possible to obtain an anion exchange resin having quaternary ammonium groups also by reacting such an alkylating agent to an anion exchange resin having tertiary amino groups as the main functional groups prepared by the above-mentioned EC reaction. It is also possible to convert the primary amino groups to quaternary ammonium groups by reacting the primary amino groups with the above-mentioned alkylating agent in excess amount. However, by any method, it is difficult to obtain an anion exchange resin in which all the functional groups are quaternary ammonium groups. In a strongly basic anion exchange resin of the present invention, the proportion of quaternary ammonium groups in the total amount of anion exchange groups is more than 50%, preferably from 50 to 90%. Of course, it is possible to make a strongly basic anion exchange resin having a minor amount of quaternary ammonium groups.

The ion exchange resin of the present invention has a large ion exchange capacity. For example, a weakly basic anion exchange resin having primary amino groups as the functional groups, has an ion exchange capacity of from 8 to 22 meq/g. A resin having an ion exchange capacity of from 10 to 22 meq/g, especially from 10 to 17 meq/g, is preferred, since such a resin is excellent also from the viewpoint of the physical properties. Further, in the swelled state in water, it has an ion exchange capacity of at least 1.5 meq/ml, preferably at least 2.0 meq/ml.

As a weakly basic anion exchange resin, the one having secondary or tertiary amino groups as the functional groups is usually more useful than the one having primary amino groups. Accordingly, as a weakly basic anion exchange resin, the one having an alkylation degree of the amino groups of from 1.6 to 1.9, is preferred. Such a weakly basic anion exchange resin has an ion exchange capacity of from 3 to 16 meq/g. A resin having an ion exchange capacity of from 4.5 to 14 meq/g, especially from 7 to 11.5 meq/g, is preferred. Further, in the swelled state in water, it has an ion exchange capacity of at least 1.0 meq/ml, preferably at least 1.5 meq/ml.

The strongly basic anion exchange resin wherein quaternary ammonium groups constitute at least 50% of the total anion exchange capacity, has a salt splitting capacity of from 1.5 to 8.5 meq/g, preferably from 2.5 to 8.5 meq/g. Further, in the swelled state in water, it has an anion exchange capacity of at least 1.0 meq/ml, preferably at least 1.5 meq/ml.

The anion exchange resin of the present invention has no organic chlorine in its structure. Therefore, it is free from eluting chloride ions due to decomposition of an organic chlorine as observed during the use of conventional anion exchange resins.

The anion exchange resin of the present invention having secondary or tertiary amino groups as ion exchange groups, has no benzene ring attached to the carbon atom at the α-position to the nitrogen atom of each amino group. Therefore, such an anion exchange resin has a higher basicity of amine than conventional polystyrene-type weakly basic anion exchange resins having the same secondary or tertiary amino groups as ion exchange groups, and it is capable of adsorbing even a weak electrolyte which can not be adsorbed by polystyrene-type weakly basic anion exchange resins.

The anion exchange resin of the present invention contains no benzyl groups, as is different from conventional polystyrene-type anion exchange resins. Further, it has a structure in which strongly hydrophilic amino groups are directly bonded to a strongly hydrophobic polyethylene chain, whereby it is less likely to non-specifically adsorb organic substances. Accordingly, it is less susceptible to organic contamination, even if it is used for water treatment or for purification of various substances.

The anion exchange resin of the present invention can be used for various applications in the same manner as conventional ion exchange resins. For example, it is used as carriers packed in chromatography column, carriers for fixing enzymes, cells and microorganisms and adsorbents.

The anion exchange resin of the present invention is free from eluting halogen ions from the resin during its use, and elution of an organic substance is little. Therefore, it is advantageously be used for treatment of cooling water for a nuclear reactor, or for the preparation of ultra-pure water to be used for the process for producing ultra-large scale integrated circuits.

Further, an anion exchange resin having secondary or tertiary amino groups as the functional groups according to the present invention, has high regeneration efficiency of the resin, and it can be regenerated substantially completely by an aqueous sodium hydroxide solution in an equivalent amount of twice the ion exchange capacity. Accordingly, this resin is advantageously used for softening water for boilers or for water treatment in other fields. For example, a mixed bed comprising the weakly basic anion exchange resin of the present invention and a strongly acidic cation exchange resin can steadily yield deionized water with conductivity less than 0.1 µS cm⁻¹.

The resin of the present invention is suitable also for adsorption of a gas. It is preferred to use a resin comprising 70 to 97% by weight of vinyl amine units and 1 to 30% by weight of divinylbenzene units. The functional groups of the resin may be either primary, secondary or tertiary amino groups or quaternary ammonium groups. The gas to be adsorbed may, for example, be a halogen gas such as fluorine, chlorine or bromine, an acidic gas such as hydrogen fluoride, hydrogen chloride, hydrogen bromide, hydrogen iodide, sulfur dioxide, carbon dioxide, nitrogen oxide (NOx), hydrogen sulfide, formic acid, acetic acid or trichloroacetic acid, an alkylthiol, a lower alkyl halide such as methyl chloride, ethyl chloride or methyl bromide, or an aldehyde such as acetaldehyde. The resin of the present invention has a large adsorption capacity particularly for an acidic gas. This is considered to be basically attributable to the large ion exchange capacity. However, since a factor other than the electrostatic interaction is also concerned with the adsorption mechanism of a gas, the adsorption of the gas will not necessarily be proportional to the ion exchange capacity. To adsorb a gas by the anion exchange resin of the present invention, the resin is dried and packed in a column, and a gas mixture containing the gas to be adsorbed, is permitted to flow through the column at room temperature. Desorption of the gas from the resin may be conducted usually by washing with a basic aqueous solution in the same manner as for the regeneration of the anion exchange resin. In a case where the adsorbed gas is carbon dioxide or NOx, desorption may simply be conducted by washing with water. Further, desorption may sometimes be accomplished by passing steam or a heated gas. When the amino groups are primary, secondary or tertiary, the anion exchange resin of the present invention is durable at a temperature of about 120°C.

The anion exchange resin of the present invention is scarcely susceptible to contamination with organic substances. Accordingly, it is suitable for use for decoloring i.e. for adsorption of a coloring contaminant from an aqueous solution containing organic substances. Most suitable for this purpose is a resin comprising from 40 to 95, expecially from 70 to 90 mol% of vinyl amine units and from 0.5 to 40, especially from 10 to 30 mol% of divinylbenzene units. As the resin, the one having tertiary amino groups as the functional groups, is advantageous from the viewpoint of the adsorbing ability and regeneration. Accordingly, it is preferred to employ a weakly basic anion exchange resin having an alkylation degree of amino groups of from 1.6 to 1.9 and an ion exchange capacity of from 3 to 13 meq/g, particularly from 7 to 11.5 meq/g. The particle size of the resin is in the range of from 1 to 3,000 µm, preferably from 300 to 2,000 µm.

Solutions to be treated for decoloring may, for example, be solutions resulting from e.g. fermentation for the production of amino acids, juices of fruits, or various sugar solutions such as cane sugar, beet sugar and starch sugar solutions. The present invention is particularly suitable for use for decoloring sugar solutions and can be applied for decoloring sugar solutions having a wide range of concentrations ranging from 0.5 to 80 as represented by Brix.

Contact of the resin and the solution to be treated, is conducted at room temperature or at an elevated temperature. Especially in a case of a solution having a high viscosity such as a sugar solution of high concentration, it is advisable to conduct the contact at an elevated temperature to lower the viscosity. The upper limit of the temperature depends on the heat resistance of the resin. When the ion exchange groups are quaternary ammonium groups, the heat resistance of the resin is usually low, although it depends also on the counter ions. Therefore, such a resin is used usually at a temperature of not higher than 100°C. In general, the Cl form has higher heat resistance than the OH form and a higher decoloring rate. Accordingly, the resin is used usually in the Cl form.

In the case of a weakly basic resin wherein the ion exchange groups are primary to tertiary amines, the resin may be in the Cl form or the OH form. However, it is used usually in the OH form, because when it is used in the OH form, not only decoloring but also demineralization can be carried out simultaneously. Further, the weakly basic resin has a high heat resistance, and thus is useful for decoloring at a high temperature even in the OH form.

In the case of the weakly basic resin, the solution to be treated is acidified before it is contacted with the resin. It is usually preferred to contact it after adjusting it to not higher than pH5, more preferably at a level of pH1 to 3. In a case where demineralization is also to be carried out, it is preferred that the solution to be treated, is first contacted with a strongly acidic cation exchange resin to adsorb cations and at the same time to acidify the solution. When the weakly basic resin is used in a mixed bed with the strongly acidic cation exchange resin, the solution to be treated may be passed as a neutral solution.

The resin having the decoloring ability decreased by adsorption of the coloring contaminant, may be regenerated by contacting it with an aqueous alkaline solution such as an aqueous sodium hydroxide solution or an aqueous solution of a salt such as an aqueous sodium chloride solution to desorb the adsorbed coloring contaminant, in the same manner as for the regeneration of usual anion exchange resins. When the ion exchange groups are quaternary ammonium groups, it is common that an aqueous sodium hydroxide solution is passed through the resin to desorb the adsorbed coloring contaminant, and then an aqueous sodium chloride solution is passed therethrough to convert the ion exchange groups to the Cl form. When the ion exchange groups are primary to tertiary amino groups, not only an aqueous sodium hydroxide solution, but also aqueous ammonia or an aqueous sodium carbonate solution may, for example, be employed. When the resin is used in the form where the ion exchange groups are in the Cl form, the coloring contaminant may be desorbed by passing an aqueous sodium chloride solution.

According to the present invention, the following merits will be obtained as compared with conventional polystyrene-type or polyacryl-type anion exchange resins.
(1) A large decoloring capacity of from several to several tens times is obtainable.
(2) The stationary leakage of the colorant component is as low as several tenths. For example, in the case of a resin with tertiary amino groups, the leakage will be as low as not more than 10%, while the leakage by conventional resins may be from 30 to 40%.
(3) According to the present invention, the desorption rate i.e. the elution rate of an adsorbed coloring contaminant at the time of regeneration, is very high at a level of about 100%, while it is from 20 to 60% for conventional weakly basic polystyrene-type resins. This is believed to be attributable to the fact that the resin used in the present invention basically has no benzyl group and has a structure wherein a hydrophobic polyethylene chain is covered by hydrophilic amino groups.

The anion exchange resin of the present invention can be used advantageously for removing silica in water i.e. a silicate compound or colloidal silica present in water in a very small amount. The resin to be used for this purpose is required to have quaternary ammonium groups as the functional groups. It is common to employ a resin wherein quaternary ammonium groups constitute at least 30%, preferably from 50 to 90%, of the total anion exchange groups. It is preferred to use a resin comprising from 30 to 90 mol%, especially from 40 to 95 mol% of vinylamine units, from 0.1 to 40 mol%, especially from 0.5 to 30 mol% by divinylbenzene units and from 0 to 40 mol% of other units. The preferred particle size is from 300 to 1,000 µm. It is generally known that silica in water includes soluble silica and insoluble silica. Soluble silica is considered to be present mostly in the form of Si(OH)₃⁻ or SiO₆(OH)₆²⁻, and insoluble silica is considered to be present in a colloidal state. The strongly basic anion exchange resin of the present invention is capable of adsorbing not only soluble silica but also insoluble silica. Removal of silica can be conducted by passing water containing silica at room temperature through a column packed with the strongly basic anion exchange resin in the same manner as in conventional water treatment.

Now, Preparation Examples will be given for the preparation of crosslinked copolymers of N-vinylformamide (NVF) with divinylbenzene (DVB). The polymerization reaction was conducted by suspension polymerization using as the polymerization medium (continuous phase) cyclohexane containing ethylcellulose and as the dispersed phase a monomer solution containing NVF and DVB. Both the polymerization medium and the monomer solution were preliminarily subjected to bubbling with nitrogen to remove dissolved oxygen, before they were used for the reaction. As NVF, a product having a purity of 94% and containing formic acid, etc. as impurities, was used. As DVB, a product of industrial grade having a purity of 80% was used unless otherwise specified. As the polymerization initiator, V-50 (tradename for an azotype polymerization initiator, manufactured by Wako Junyaku K.K.) was used. The polymerization reaction was conducted in a nitrogen atmosphere. In each case, washing with methanol and water was conducted after completion of the polymerization reaction in the same manner for copolymer A.

### Copolymer A:

Into a 500 ml four-necked flask, 200 ml of cyclohexane and 500 mg of ethylcellulose were introduced to prepare a polymerization medium. On the other hand, 95 g of NVF, 5.0 g of p-DVB (purity: >90%), 5 g of dimethylsulfoxide and 500 mg of V-50 were mixed to prepare a monomer solution. While stirring the polymerization medium at a rotational speed of 100 rpm, the monomer solution was gradually dropwise added thereto. After stirring for 30 minutes, the temperature was raised, and polymerization was conducted at 65°C for 8 hours. The monomer solution gelled in about 15 minutes after completion of the temperature rise. No heat generation by polymerization was observed. After completion of the polymerization, the gelled crosslinked copolymer was collected by filtration. The crosslinked copolymer was washed with methanol to remove remaining divinylbenzene, cyclohexane, etc. Then, it was washed with water to remove oligomers. The polymerization yield was 79%. The obtained crosslinked copolymer was white as visually observed, but slightly opaque under microscopic observation. The content of DVB in this crosslinked copolymer is theoretically 3.0 mol%. However, it was 3.3 mol% by the analysis by means of ¹³C-NMR (CP-MAS method) and 3.5 mol% by the elemental analysis.

### Copolymer B:

Into a 500 ml four-necked flask, 200 ml of cyclohexane and 300 mg of ethylcellulose were introduced to prepare a polymerization medium. On the other hand, 80 g of a NVF, 20 g of DVB, 2 g of deionized water and 200 mg of V-50 were mixed to prepare a monomer solution. While stirring the polymerization medium at a rotational speed of 100 rpm, the monomer solution was gradually dropwise added thereto. After stirring for 30 minutes, the temperature was raised, and polymerization was conducted at 65°C for 8 hours. The monomer solution gelled in about 15 minutes after completion of the temperature rise. The polymerization yield was 78%. The obtained polymer was gel-like.

### Copolymer C:

Into a 500 ml four-necked flask, 200 ml of cyclohexane and 500 mg of ethylcellulose were introduced to prepare a polymerization medium. On the other hand, 75 g of NVF, 25 g of DVB, 3 g of deionized water and 150 mg of V-50 were mixed to prepare a monomer solution. While stirring the polymerization medium at a rotational speed of 150 rpm, the monomer solution was gradually dropwise added thereto. After stirring for 30 minutes, the temperature was raised, and polymerization was conducted at 65°C for 8 hours. The monomer solution gelled in about 25 minutes after completion of the temperature rise. The polymerization yield was 73%. The obtained copolymer was a white polymer, but gel-like. Further, the specific surface area was 0 m²/g as measured by a nitrogen adsorption method.

### Copolymer D:

Into a 500 ml four-necked flask, 200 ml of cyclohexane and 500 mg of ethylcellulose were introduced to prepare a polymerization medium. On the other hand, 78 g of NVF, 12 g of DVB, 5 g of deionized water, 10 g of glycerol methacrylate and 200 mg of V-50 were mixed to prepare a monomer solution. While stirring the polymerization medium at a rotational speed at 150 rpm, the monomer solution was gradually dropwise added thereto. After stirring for 30 minutes, the temperature was raised, and polymerization was conducted at 60°C for 8 hours. The monomer solution gelled in about 15 minutes after completion of the temperature rise. The polymerization yield was 81%. The obtained copolymer was a spherical gelled polymer.

### Copolymer E:

Into a 500 ml four-necked flask, 200 ml of cyclohexane and 200 mg of ethylcellulose were introduced to prepare a polymerization medium. On the other hand, 65 g of NVF, 35.0 of DVB, 2 g of deionized water and 50 mg of V-50 were mixed to prepare a monomer solution. While stirring the polymerization medium at a rotational speed of 100 rpm, the monomer solution was gradually dropwise added thereto. After stirring for 30 minutes, the temperature was raised, and polymerization was conducted at 65°C for 8 hours. The monomer solution gelled in about 15 minutes after completion of the temperature rise. No heat generation by polymerization was observed. The polymerization yield was 76%. The obtained copolymer was white as visually observed. The content of divinylbenzene was 21 mol% from the elemental analysis of nitrogen.

### Copolymer F:

Into a 1,000 ml four-necked flask, 400 ml of cyclohexane and 800 mg of ethylcellulose were introduced to prepare a polymerization medium. On the other hand, 180 g of vinylformamide, 20.0 g of DVB, 4.5 g of deionized water and 400 mg of V-50 were mixed to prepare a monomer solution. While stirring the polymerization medium at a rotational speed of 100 rpm, the monomer solution was gradually dropwise added thereto. After stirring for 30 minutes, the temperature was raised, and polymerization was conducted at 65°C for 8 hours. The monomer solution gelled in about 15 minutes after completion of the temperature rise. The polymerization yield was 81%. The obtained crosslinked copolymer was white as visually observed, but slightly opaque under microscopic observation. The obtained polymer was a geltype crosslinked copolymer having a swelling degree of 4.63 ml/g and a water content of 68.9%, and the specific surface area was 0 m²/g.

### Copolymer G:

A copolymer was prepared in the same manner as in the preparation of Copolymer F except that the amount of NVF was changed to 176 g, and the amount of DVB was changed to 24.0 g. The obtained copolymer was white as visually observed, but slightly opaque under microscopic observation.

### Copolymer H:

A copolymer was prepared in the same manner as in the preparation of Copolymer F except that the amount of NVF was changed to 160 g, and the amount of DVB was changed to 42 g.

Examples in which NVF-DVB crosslinked copolymers prepared by the copolymerization reactions, were hydrolyzed to obtain anion exchange resins having primary amino groups and Examples in which hydrolyzates were alkylated to obtain anion exchange resins having tertiary amino groups or quaternary ammonium groups, will be given. The ion exchange capacities were measured in accordance with the following method or a modified method thereof.

### Measurement of ion exchange capacities

About 15 ml of an anion exchange resin is packed in a column. Through this column, 500 ml of a 2N NaOH aqueous solution is passed at SV70/hr to convert the resin to a OH form. Then, 1 ℓ of deionized water is passed through the column at SV70/hr to wash the resin. 10.0 ml of this resin is accurately taken by a measuring cylinder and packed into a column. Through this column, 250 ml of a 5% NaCl aqueous solution is passed at SV70/hr. The eluate from the column is titrated with a HCl aqueous solution. HCl required for the titration is A mmol.

Then, through this column, 100 ml of a 1N HCl aqueous solution is passed at a rate of 10 ml/hr, and then 50 ml of methanol is passed at a rate of 10 ml/hr. Further, the liquid remaining in the column is pressed out by air. All the liquid eluted from the column is put together and titrated with a NaOH aqueous solution. NaOH required for the titration is B mmol.

Separately, 10.0 ml of the resin of the OH form is taken by a measuring cylinder and subjected to centrifugal separation to remove attached water. Then, this resin is dried at 60°C for 5 hours, whereupon the weight is measured. The weight is C g.

The salt splitting capacity, the weak base exchange capacity and the anion exchange capacity are represented as follows:
- Salt splitting capacity: : A/C (mmol/g)
: A/10 (mmol/ml)
- Weak base exchange capacity: : (100-B)/C (mmol/g)
: (100-B)/10 (mmol/ml)
- Anion exchange capacity: : (100+A-B)C (mmol/g)
: (100+A-B)/10 (mmol/ml)

### Measurement of the methylation degree of amino groups

The methylation degree of amino groups was calculated by ¹³C-NMR (CB-MAS method). Namely, in the NMR spectrum of an anion exchange resin, the area attributable to the carbon of the vinyl group of the divinylbenzene, is subtracted from the area of the peak attributable to the carbon of the polyethylene chain appearing in the vicinity of from 35 to 45 ppm to obtain the area attributable to the carbon of vinyl amine. This area is compared with the area of the peak attributable to the methyl group bonded to the nitrogen appearing in the vicinity of from 50 to 60 ppm to calculate the methylation degree of amino groups. If amino groups are completely methylated, the area ratio of the two becomes to be 1.0, and the methylation degree is 2.0.

### Anion exchange resin (P-1):

Wet crosslinked copolymer A was put into a 1 ℓ flask, and 200 ml of a 5N hydrochloric acid aqueous solution was added thereto. The solution was heated and hydrolysis was carried out at from 95 to 102°C for 5 hours. After completion of the reaction, the hydrolyzed crosslinked copolymer was washed with water and then treated with a 0.1N NaOH aqueous solution to convert the ion exchange groups to
-NH₂ (free form). By NMR (CP-MAS method), it was confirmed that 5 mol% of formyl groups remained in this weakly acidic anion exchange resin.

This resin had a weak base exchange capacity of 17.1 meq/g (1.54 meq/ml) and an average particle size of about 340 µm.

### Anion exchange resin (P-2):

Wet crosslinked copolymer A was put into a 1 ℓ flask, and 500 ml of a 2N NaOH aqueous solution was added thereto. The solution was heated and hydrolysis was carried out at 90°C for 5 hours. By ¹³C-NMR (CP-MAS method), it was confirmed that the formyl groups completely disappeared. The obtained anion exchange resin had a weak base exchange capacity of 18.4 meq/g (1.56 meq/ml) and an average particle size of about 355 µm.

### Anion exchange resin (P-3):

Wet copolymer B was put into a 1 ℓ flask, and 800 ml of a 2N NaOH aqueous solution was added thereto. The solution was heated and hydrolysis was carried out at 90°C for 4 hours. The obtained anion exchange resin had a weak base exchange capacity of 12.2 meq/g (3.01 meq/ml) and an average particle size of about 280 µm.

### Anion exchange resin (P-4):

Wet copolymer C was put into a 1 ℓ flask, and 500 ml of a 5N NaOH aqueous solution was added thereto. The solution was heated and hydrolysis was carried out at 90°C for 9 hours. After completion of the reaction, the polymer was washed with water. The obtained anion exchange resin had a weak base exchange capacity of 14.3 meq/g and an average particle size of about 280 µm.

### Anion exchange resin (P-5):

Wet copolymer D was put into a 1 ℓ flask, and 800 ml of a 3N NaOH aqueous solution was added thereto. The solution was heated and hydrolysis was carried out at 90°C for 8 hours. After the reaction, the resin was washed with water. The obtained anion exchange resin had a weak base exchange capacity of 14.3 meq/g and an average particle size of about 285 µm.

### Anion exchange resin (P-6):

Wet copolymer E was put into a 1 ℓ flask, and 500 ml of a 2N NaOH aqueous solution was added thereto. The solution was heated and hydrolysis was carried out at 80°C for 4 hours. After completion of the reaction, the product was washed with water. The obtained anion exchange resin had a weak base exchange capacity of 9.47 meq/g and an average particle size of about 390 µm.

### Anion exchange resin (P-7):

100 ml of wet copolymer F and 100 ml of deionized water were put into a 500 ml flask, and 25 g of sodium hydroxide was added thereto. Hydrolysis of the copolymer was carried out at 90°C for 4 hours. The obtained anion exchange resin had a weak base exchange capacity of 18.0 meq/g (2.46 meq/ml) and an average particle size of about 330 µm. Further, the exactly the same anion exchange resin was obtained also in the case where hydrolysis was conducted at 85°C for 4 hours in a 2N NaOH aqueous solution.

### Anion exchange resin (P-8):

Copolymer G was hydrolyzed at 85°C for 4 hours in a 2N NaOH aqueous solution to obtain an anion exchange resin. This anion exchange resin had a weak base exchange capacity of 18.0 meq/g (2.46 meq/ml).

### Anion exchange resin (M-1):

Using anion exchange resin P-1 (free form), the EC reaction was conducted. Into a 500 ml four-necked flask, 50 ml of wet anion exchange resin P-1 and 20 ml of a 37% formaldehyde solution were added. 40 ml of a 50% sodium formate aqueous solution adjusted to pH5, was gradually added thereto by a dropping funnel. After completion of the dropwise addition, the temperature was gradually raised, and the reaction was conducted at 80°C for 6 hours. During the temperature rise, carbon dioxide gas began to be generated at a temperature of about 50°C. Upon expiration of 6 hours, no substantial generation of carbon dioxide gas was observed. As the reaction proceeded, the anion exchange resin became heavy. After completion of the reaction, the anion exchange resin was taken out and collected on a Buchner funnel and washed with methanol. The resulted anion exchange resin had a weak base exchange capacity of 10.1 meq/g (1.28 meq/ml) and an average particle size of about 330 µm. The alkylation degree was 1.8.

### Anion exchange resin (M-2):

Into a 500 ml four-necked flask, 50 ml of wet anion exchange resin P-1 (free form) and 100 ml of a 50% methanol aqueous solution were added. 20 g of methyl iodide was introduced thereto. During the reaction, sodium carbonate was added to make the solution basic. As the reaction proceeded, the anion exchange resin became heavy and easy to precipitate. After completion of the reaction, the resulted anion exchanger was taken out and collected on a Buchner funnel, and it was further washed with methanol and water. The obtained anion exchange resin had a salt splitting capacity of 5.2 meq/g (1.32 meq/ml), a weak base exchange capacity of 1.2 meq/g, an anion exchange capacity of 6.4 meq/g and an average particle size of about 350 µm.

### Anion exchange resin (M-3):

Wet anion exchange resin P-1 (free form) was introduced into a 1 ℓ glass autoclave, and 500 ml of a 50% methanol aqueous solution was added thereto. Then, 200 ml of a 3N NaOH aqueous solution and 290 ml of methyl iodide were introduced thereto. This solution was heated, and alkylation was conducted at 60°C under 1.7 atm for 6 hours. After completion of the reaction, the anion exchange resin was taken out and collected on a Buchner funnel, and excess methyl iodide was washed off with methanol. The resin was further washed with water. This resin was packed into a column and converted to a SO₄²⁻ form by a 1M Na₂SO₄ aqueous solution, and then it was converted to a NO₃⁻ form by a 1M NaNO₃ aqueous solution and further converted to a Cl⁻ form by a 1M NaCl aqueous solution. Finally, it was converted to a OH form by a 1N NaOH aqueous solution. The functional groups of the obtained resin were a mixture of strongly basic groups (-N⁺(CH₃)₃OH⁻) and weakly basic groups (-N(CH₃)₂ and -NHCH₃). The resin was a transparent polymer having an average particle size of about 335 µm and a water content of 58%. Further, the salt splitting capacity was 3.24 meq/g (0.96 meq/ml), the weak base exchange capacity was 2.90 meq/g (0.86 meq/ml), and the anion exchange capacity was 6.14 meq/g (1.82 meq/ml).

### Anion exchange resin (M-4):

Wet anion exchange resin P-3 (free form) was introduced into a 1 ℓ glass autoclave, and 500 ml of a 70% methanol aqueous solution was added thereto. Then, 250 ml of a 3N NaOH aqueous solution and 250 ml of methyl iodide were introduced thereto. The solution was heated, and alkylation was conducted at 60°C under 1.8 atm for 4 hours. After completion of the reaction, the anion exchange resin was taken out and collected on a Buchner funnel, and excess methyl iodide was washed off with methanol. The resin was then washed with water. The functional groups of the obtained resin were a mixture of strongly basic groups (-N⁺(CH₃)₃·OH⁻) and weakly basic groups (-NHCH₃ and -N(CH₃)₂). The resin had an average particle size of about 270 µm and a water content of 67% and was transparent. The salt splitting capacity was 4.01 meq/g (1.05 meq/ml), the weak base exchange capacity was 2.71 meq/g (0.71 meq/ml), and the anion exchange capacity was 6.72 meq/g (1.76 meg/ml) as measured in the same manner as for anion exchange resin M-2.

### Anion exchange resin (M-5):

Into a 500 ml four-necked flask, 50 ml of wet anion exchange resin P-1 (free form) and 20 ml of a 37% formaldehyde solution were added. Then, 40 ml of a 50% sodium formate aqueous solution was gradually added thereto by a dropping funnel. After completion of the dropwise addition, the temperature was gradually raised, and the reaction was conducted at 80°C for 6 hours. During the temperature rise, carbon dioxide gas began to be generated at a temperature of about 50°C. Upon expiration of 6 hours, no substantial generation of carbon dioxide gas was observed. As the reaction proceeded, the resin became heavy and easy to precipitate. After completion of the reaction, the resulted resin was taken out and collected on a Buchner funnel. It was washed with water and then with methanol.

Into a 500 ml four-necked flask, 50 ml of the above resin and 100 ml of a 70% methanol aqueous solution were added. Then, 15 g of methyl iodide was introduced thereto, and the reaction was conducted. As the reaction proceeded, the resin became heavy and was colored yellow. After completion of the reaction, the resin was taken out and collected on a Buchner funnel, and it was washed with methanol. The functional groups of the obtained resin were a mixture of strongly basic groups (-N⁺(CH₃)₃·OH⁻) and weakly basic groups (-NHCH₃ and -N(CH₃)₂). The resin had an average particle size of about 350 µm and a water content of 58% and was transparent. The salt splitting capacity was 4.28 meq/g (1.24 meq/ml), the weak base exchange capacity was 2.42 meq/g (0.70 meq/ml), and the anion exchange capacity was 6.70 meq/g (1.94 meq/ml) as measured in the same manner as for anion exchange resin M-2.

### Anion exchange resin (M-6):

Into a 500 ml four-necked flask, 20 ml of wet anion exchange resin P-6 (free form) and 20 ml of a 37% formaldehyde solution were added. Then, 40 ml of a 50% sodium formate aqueous solution adjusted to pH5 was gradually added thereto by a dropping funnel. After completion of the dropwise addition, the temperature was gradually raised, and the reaction was conducted at 80°C for 6 hours. During the temperature rise, carbon dioxide gas began to be generated at a temperature of about 50°C. Upon expiration of 6 hours, no substantial generation of carbon dioxide gas was observed. As the reaction proceeded, the resin became heavy. After completion of the reaction, the resin was taken out and collected on a Buchner funnel, and it was washed with methanol. The obtained resin had a weak base exchange capacity of 6.45 meq/g and an average particle size of about 400 µm. The methylation degree of the amino groups was 1.75.

### Anion exchange resin (M-7):

100 ml of wet copolymer A and 100 ml of deionized water were introduced into a 500 ml flask. Then, 32 g of sodium hydroxide was introduced thereto, so that the initial concentration of the NaOH aqueous solution would be 5N and the final concentration of the solution would be 2.5N NaOH. The hydrolysis was conducted at 20°C for 3 hours. After completion of the reaction, the solution was cooled to 50°C, and 27 g of formic acid and 81 g of a 37% formaldehyde aqueous solution were added thereto. Further, hydrochloric acid was added to adjust the pH to 5. The temperature was gradually raised, and the reaction was conducted at 90°C for 3 hours. At the initial stage, carbon dioxide gas was generated vigorously, but at completion of the reaction, no substantial generation of the gas was observed. After completion of the reaction, the polymer was washed with water and then with a 0.1N NaOH aqueous solution to convert it to a OH form. This anion exchange resin had a weak base exchange capacity of 9.3 meq/g and an average particle size of about 340 µm. The methylation degree of the amino groups was 1.8.

### Anion exchange resin (M-8):

100 ml of wet copolymer A and 50 ml of deionized water were introduced into a 500 ml flask. Then, 35 ml of 35% concentrated hydrochloric acid was introduced thereto, so that the initial concentration of the solution would be 2.5N. Hydrolysis was conducted at 90°C for 4 hours. After cooling the solution to 50°C, 40 g of sodium formate and 85 g of a 37% formaldehyde aqueous solution were added thereto. An aqueous sodium hydroxide solution was dropwise added to adjust the solution to pH5. The temperature was raised, and the reaction was conducted at 90°C for 3 hours. At the initial stage, carbon dioxide gas was generated vigorously, but at completion of the reaction, no substantial generation of the gas was observed. After completion of the reaction, the polymer was washed with water and then with a 0.1N NaOH aqueous solution to convert it to a OH form. This anion exchange resin had a weak base exchange capacity of 8.7 meq/g and an average particle size of about 340 µm.

### Anion exchange resin (M-9):

100 ml of wet copolymer A and 100 ml of deionized water were introduced into a 500 ml flask. Then, 26 g of sodium hydroxide was introduced thereto, so that the initial concentration would be 3.8N and the final concentration would be 1.5N NaOH. Hydrolysis was conducted at 90°C for 3 hours. After completion of the reaction, the solution was cooled to 50°C, and 10 g of formic acid and 38 g of a 37% formaldehyde aqueous solution were added thereto. Further, hydrochloric acid was added to adjust the pH to 5. The temperature was gradually raised, and the reaction was conducted at 90°C for 3 hours. At the initial stage, carbon dioxide gas was generated vigorously, but at completion of the reaction, no substantial generation of the gas was observed. After completion of the reaction, the polymer was washed with water and then with a 0.1N NaOH aqueous solution to convert it to a OH form. This anion exchange resin had a weak base exchange capacity of 13.7 meq/g and an average particle size of about 340 µm. The methylation degree of the amino groups was 1.16 as measured based on the increase of weight.

### Anion exchange resin (M-10):

100 ml of wet copolymer F and 100 ml of deionized water were introduced into a 500 ml flask, and 38 g of formic acid and 87 g of a 37% formaldehyde aqueous solution were added thereto. Further, an aqueous sodium hydroxide solution was added to adjust the pH to 5. The temperature was gradually raised, and the reaction was conducted at 90°C for 5 hours. At the initial stage, carbon dioxide gas was generated vigorously, but at completion of the reaction, no substantial generation of the gas was observed. The obtained anion exchange resin had a weak base exchange capacity of 9.6 meq/g and an average particle size of about 340 µm. The methylation degree of the amino groups was 1.85. The specific surface area was 0 m²/g, since it was a gel-type crosslinked copolymer.

### Anion exchange resin (M-11):

100 ml of wet copolymer F and 100 ml of deionized water were introduced into a 500 ml flask. Then, 32 g of sodium hydroxide (NaOH) was introduced thereto, so that the initial concentration of the NaOH aqueous solution would be 5N and the final concentration of the aqueous solution would be 2.5N. Hydrolysis was conducted at 85°C for 3 hours. The solution was cooled to 40°C, and then 27 g of formic acid and 81 g of a 37% formaldehyde aqueous solution were added thereto. Further, hydrochloric acid was added to adjust the pH of the solution to 5. The temperature was gradually raised, and the reaction was conducted at 90°C for 3 hours. At the initial stage, carbon dioxide gas was generated vigorously, but at completion of the reaction, no substantial generation of the gas was observed. After completion of the reaction, the resin was washed with water and then with a 0.1N NaOH aqueous solution to convert it to a OH form. The obtained anion exchange resin had a weak base exchange capacity of 9.3 meq/g and an average particle size of about 340 µm. The methylation degree of amino groups was 1.8.

### Anion exchange resin (M-12):

Into a 500 ml four-necked flask, 50 ml of wet anion exchange resin P-7 and 150 ml of a 50% methanol aqueous solution were added. Then, 50 ml of a methanol aqueous solution containing 30 ml of methyl iodide and an aqueous solution containing 28 g of sodium carbonate were gradually dropwise added thereto. After completion of the reaction, the resin was collected on a Buchner funnel and washed with methanol and deionized water. The obtained resin had a salt splitting capacity of 6.3 meq/g, a weak base exchange capacity of 1.9 meq/g, an anion exchange capacity 8.2 meq/g, and an average particle size of about 330 µm.

### Anion exchange resin (M-13):

100 ml of anion exchange resin P-7 and 100 ml of deionized water were introduced into a 500 ml flask, and 38 g of formic acid and 87 g of a 37% formaldehyde aqueous solution were added thereto. Further, an aqueous sodium hydroxide solution was added to adjust the pH to 5. The temperature was gradually raised, and the reaction was conducted at 90°C for 5 hours. At the initial stage, carbon dioxide gas was generated vigorously, but at completion of the reaction, no substantial generation of the gas was observed. After completion of the reaction, the crosslinked copolymer was washed with water. The obtained crosslinked copolymer had a weak base exchange capacity of 9.6 meq/g (1.9 meq/ml). The average particle size of the polymer was about 410 µm. Among the anion exchange groups, at least 90% was estimated to be a tertiary amine, the rest being a mixture of a primary amine and a secondary amine.

### Anion exchange resin (M-14):

100 ml of wet anion exchange resin P-8 and 100 ml of deionized water were introduced into a 1,000 ml flask, and 40 g of sodium formate and 81 g of a 37% formaldehyde aqueous solution were added thereto. Further, hydrochloric acid was added to adjust the pH to 5. The temperature was gradually raised, and the reaction was conducted at 90°C for 5 hours. At the initial stage, carbon dioxide gas was generated vigorously, but at completion of the reaction, no substantial generation of the gas was observed. After completion of the reaction, the resin was washed with water and then with a 0.1N sodium hydroxide aqueous solution to convert it to a OH form. The obtained resin had a weak base exchange capacity of 9.3 meq/g (1.95 meq/ml) and an average particle size of about 340 µm. The methylation degree of amino groups was 1.8.

### Anion exchange resin (M-15):

Hydrolysis of a copolymer and alkylation of the resulting resin having primary amino groups were conducted in the same manner as in the preparation of anion exchange resin M-14 except that copolymer H was used.

The obtained anion exchange resin had a weak base exchange capacity of 8.5 meq/g (2.19 meq/ml) and an average particle size of about 390 µm. The methylation degree of amino groups was 1.7.

### Anion exchange resin (M-16):

Into a 500 ml four-necked flask, 50 ml of wet anion exchange resin P-8 and 150 ml of a 50% methanol aqueous solution were added. Then, 30 ml of methyl iodide, 50 ml of a 50% methanol aqueous solution and an aqueous solution containing 28 g of sodium carbonate were gradually dropwise added thereto. After completion of the reaction, the resin was collected by filtration and washed with methanol and deionized water. The obtained anion exchange resin had a salt splitting capacity of 6.3 meq/g, a weak base exchange capacity of 1.9 meq/g, an anion exchange capacity 8.2 meq/g and an average particle size of about 340 µm.

### Method for measuring the ability of the resin for removing silica

### Method for preparing an aqueous stock sample solution

In 20 ℓ of deionized water, 2.981 g of anhydrous sodium sulfate (guaranteed reagent, manufactured by Kishida Chemical Company), 420 ml of a 0.1N hydrochloric acid aqueous solution and sodium metasilicate·9H₂O (guaranteed reagent, manufactured by Kishida Chemical Company) were dissolved to obtain an aqueous stock sample solution. The composition of the stock sample solution was 300 ppm (calculated as CaCO₃), SO₄²⁻/Cl⁻ = 1.00, ratio of SiO₂:30%.

### Method for measuring the concentration of silica

To 50 ml of a sample solution, 1 ml of a hydrochloric acid solution (one volume of 35% hydrochloric acid + one volume of deionized water) and 2 ml of a solution of ammonium molybdate·4H₂O (guaranteed reagent, manufactured by Kishida Chemical Company) (a solution prepared by dissolving 5.30 g of ammonium molybdate·4H₂O in 50 ml of deionized water) were added, and the mixture was left to stand for 5 minutes. Further, 1.50 ml of an oxalic acid solution (a solution prepared by dissolving 20 g of oxalic acid dihydrate, manufactured by Tokyo Kasei K.K., in deionized water and adjusting the volume to 200 ml) and 2.00 ml of a solution of 1-amino-2-naphthol-4-sulfonic acid (manufactured by Tokyo Kasei K.K.) (a solution prepared by dissolving 0.500 g of 1-amino-2-naphthol-4-sulfonic acid and 2.00 g of sodium sulfate (guaranteed reagent, manufactured by Kishida Chemical Company) in 50 ml of deionized water, while dissolving 20 g of sodium hydrogen sulfate (guaranteed reagent, manufactured by Kishida Chemical Company) in 120 ml of deionized water, mixing the two solutions, and adjusting the total volume to 200 ml with deionized water) were added thereto, and the mixture was left to stand for 10 minutes. The absorbance at 815 nm of the obtained solution was measured (U-1100 Model ratio beam type spectrophotometer, manufactured by Hitachi, Ltd.), and the concentration of silica was determined by a calibration curve preliminarily prepared.

### Preparation of the calibration curve

1,000 ppm of a Si standard solution for atomic absorptiometry (manufactured by Wako Junyaku K.K.) was diluted with deionized water, and a calibration curve was prepared within a range of from 5 ppb to 5 ppm. The concentration of silica is shown as calculated as SiO₂.

### Test for passing water through the column

The stock sample solution was passed through a column (2.0 cm in diameter × about 58 cm in height) packed with 180 ml of Diaion® SKlB (strongly acidic cation exchange resin. OH form, manufactured by Mitsubishi Kasei Corporation) at SV = 7.8 hr⁻¹, and stored in a 1 ℓ Erlenmeyer flask. This solution was passed through a column (1.36 cm in diameter × about 14 cm in height) packed with an anion exchange resin at SV = 20hr⁻¹ (the anion exchange resin was regenerated with a 2N NaOH aqueous solution and then washed with water, and it was further washed with ten times by volume of deionized water immediately prior to passing the stock sample solution therethrough, and 20.0 ml of the anion exchange resin thus treated was packed in the column).

The solution passed through the anion exchange resin, was passed through a conductivity-detecting cell (manufactured by Toa Denpa K.K., cell constant: 0.10) to constantly measure the conductivity of the eluate. Further, the eluate was periodically sampled, and the concentration of silica in the obtained solution was measured by the method as described above.

### Test samples

The samples subjected to the test were M12, strongly basic resins Diaion® SA9A and SA20A, and weakly basic resin Diaion® WA30 (each of the resins was manufactured by Mitsubishi Kasei Corporation).

**Table 1**

| Anion exchange resin | Volume of sample passed (l/l-R) | | Ion exchange capacity (meq/ml) | |
|---|---|---|---|---|
| | *1 | *2 | Salt splitting capacity | Weak base exchange capacity |
| M-12 | 250 | 255 | 0.66 | 0.48 |
| SA10A | 125 | 185 | 1.32 | - |
| SA20 | 130 | 215 | 1.30 | - |
| WA30 | 90 | 100 | 0.19 | 1.44 |

| | | | | |
|---|---|---|---|---|
| *1: Initiation of leakage | | | | |
| *2: Break through point (1ppm) | | | | |

WA30 is a weakly basic resin and yet adsorbs SiO₂. This is believed attributable to the fact that WA30 partially contains a strongly basic component.

### Method for regenerating the resin

Through 25 ml of an anion exchange resin (OH form), a large excess amount of a 2N HCl aqueous solution was passed to convert the resin completely to a Cl form. This resin was washed with deionized water. Through this resin, an aqueous solution of NaOH was passed at SV = 5hr⁻¹ in an equivalent amount twice the total exchange capacity to regenerate the anion exchange resin. On the other hand, cation exchange resin Diaion® SKlB was used in the form completely regenerated with a 2N HCl aqueous solution. Such an anion exchange resin and Diaion® SKlB resin were packed into a column to form a mixed bed.

**Table 2**

| (Silica-removing ability of regenerated resins) | | |
|---|---|---|
| Anion exchange resin | Volume of sample passed (l/l-R) | |
| | *1 | *2 |
| M-12 | 170 | 175 |
| SA10A | 58 | 73 |

| | | |
|---|---|---|
| *1: Initiation of leakage | | |
| *2: Break through point (1ppm) | | |

### Test for decoloring a sugar solution

### Preparation of sample solution 1

750 g of crude sugar was dissolved in about 750 ml of deionized water, and the sugar solution was adjusted so that Brix would be 50.0. This solution was filtered through filter paper No. 5C. On the other hand, 2.0 kg of commercially available granule sugar was dissolved in about 2 ℓ of deionized water, and the sugar solution was likewise adjusted so that Brix would be 50.0. The two solutions were mixed in a volume ratio of 1.5:3.5, and diluted with the same volume of deionized water to obtain sugar solution 1. Brix of this solution was 27.8.

### Preparation of sample solution 2

In the same manner as in the preparation of sugar solution 1, a granule sugar solution and a crude sugar solution with Brix 50 were prepared, and the two were mixed in a volume ratio of 1:1 to obtain sugar solution 2 with Brix 50.

### Method for evaluating the decoloring ability of a weakly basic resin

Through a column packed with 300 ml of Diaion® SKlB completely regenerated with 2N hydrochloric acid, the sugar solution prepared as described above, was passed at SV5hr⁻¹ to remove cations in the sugar solution. The resulted sugar solution had a pH of from 1.5 to 2.2. This solution was warmed by passing it through a constant temperature tank and then passed through a column of a weakly basic resin completely regenerated with a 2N sodium hydroxide aqueous solution (a glass column equipped with a jacket, 14 mm in diameter × 40 cm in height, the layer height: about 35 cm, the amount of the resin: 50 ml) at SV5hr⁻¹. The conductivity and absorbance (at 420 nm) of the obtained sugar solution, were measured.

### Method for evaluating the decoloring ability of a strongly basic resin

The decoloring test was conducted in the same manner as for the weakly basic resin except that the sugar solution was not passed through the column of the strongly acidic cation exchange resin.

### Measurement of absorbance

A sugar solution was adjusted to pH7.0±0.1 with 1N hydrochloric acid or an aqueous sodium hydroxide solution. This sugar solution was filtered through a filter of 0.45 µm, and with respect to the filtrate, the absorbance at 420 nm was measured. For the measurement of the absorbance, a cell of 50 mm was used in Example 1, and a cell of 10 mm was used in Example 2.

### Elution of a coloring contaminant

The resin subjected to the decoloring test was taken into a beaker and introduced again into a column with deionized water to obtain a column in which the coloring contaminant was uniformly distributed.

Then, in the case of a weakly basic resin, a 1N sodium hydroxide aqueous solution in an equivalent amount of 1.5 times the weak base exchange capacity was passed at SV2hr⁻¹ at the same temperature as the temperature for passing the sugar solution to elute the coloring contaminant, and then the resin was washed with deionized water in an amount of 5 times the amount of the resin. The eluate was put together and diluted with deionized water, and then subjected to the measurement of the absorbance.

In the case of a strongly basic resin, the operation was conducted in the same manner as for the weakly basic resin except that a mixed solution comprising a 1M sodium chloride aqueous solution in an equivalent amount of 1.5 times the salt splitting capacity and a 1N sodium hydroxide aqueous solution in an equivalent amount of 0.15 time, was used.

### EXAMPLE 1

Using sugar solution 1, the decoloring ability of a resin was evaluated at 50°C. The results are shown in Table 3.

Here, the weakly basic resin was used in a OH form, and the strongly basic resin was used in a Cl form.

**Table 3**

| Anion exchange resin | Decoloring rate (%)*6 | Volume of sample solution passed (l/l-resin)*3 | Stationary conductivity (µS/m)*4 | Desorption rate (%) *5 |
|---|---|---|---|---|
| M-14 | 97 | 245 | 1 | 110 |
| M-15 | 93 | 225 | 1 | 104 |
| Commercial Resin 1^{*1} | 84 | 14 | 200 | 64 |
| Commercial Resin 2^{*2} | 70 | 6 | 1 | 44 |

| | | | | |
|---|---|---|---|---|
| *1: Diaion® PA308 (porous polystyrene-type strongly basic anion exchange resin | | | | |
| *2: Diaion® WA30 (porous polystyrene-type weakly basic anion exchange resin) | | | | |
| *3: Volume of sample solution passed until the leakage reached 10%. Here, the leakage was calculated as a ratio of the absorbance at 420 nm of the decolored sugar solution to the absorbance at 420 nm of the sample solution. As the absorbance of the sample solution for a weakly basic resin, the absorbance of the sugar solution after being treated with the strongly acidic cation exchange resin, was used. | | | | |
| *4: The conductivity of the sample solution was 140 µS/cm before the treatment with the strongly acidic cation exchange resin and 500 µS/cm after the treatment. | | | | |
| *5: The desorption rate was calculated as a ratio of the absorbance at 420 nm of the eluate to the absorbance at 420 nm of the sample solution. | | | | |
| *6: The decoloring rate is a decoloring rate when the leakage of the coloring contaminant to the eluate of the column is substantially constant and the breakthrough of the coloring contaminant has not yet occurred. | | | | |

### EXAMPLE 2

Using sample solution 2, the decoloring ability of the resin was evaluated at 60°C. The results are shown in Table 4.

**Table 4**

| Anion exchange resin | Decoloring rate (%) | Volume of sample solution passed l/l resin | Stationary conductivity (µS/m) | Desorption rate (%) |
|---|---|---|---|---|
| P-8 | 85 | 15 | 1 | 104 |
| M-14 | 97 | 77 | 1 | 106 |
| M-15 | 93 | 70 | 1 | 55 |
| M-16 | 90 | 25 | 10 | - |
| Commercial Resin 1*¹ | No stationary value*² | 7 | 200 | 27 |
| Commercial Resin 2*² | No stationary value*² | 4 | 1 | 39 |
| Commercial Resin 3*³ | No stationary value*² | 6 | 1 | 75 |

| | | | | |
|---|---|---|---|---|
| *1: Amberlyte® IRA-458 (gel-type acrylic strongly basic anion exchange resin) | | | | |
| *2: Since the coloring contaminant eluted linearly, it was impossible to calculate the decoloring rate. | | | | |

### EXAMPLE 3

A resin regenerated by eluting the coloring contaminant from the resin used in Example 2, was evaluated for the decoloring ability by passing therethrough sample solution 2 at 60°C. The results are shown in Table 5.

**Table 5**

| Anion exchange resin | Decoloring rate (%) | Volume of sample solution passed l/l resin | Stationary conductivity (µS/m) | Desorption rate (%) |
|---|---|---|---|---|
| M-14 | 95 | 75 | 1 | 106 |
| Commercial Resin 1*¹ | No stationary value | 3 | 200 | 27 |
| Commercial Resin 2*² | No stationary value | 3 | 1 | 39 |

### Measurement of the amount of adsorption of a gas

Into a container of 25°C, 2.0 g of an anion exchange resin (free form) was put, and dried gas was supplied thereinto until the adsorption equibrium achieved, whereupon the saturated gas adsorption capacity of the resin was measured. The results are shown in Table 6. For the purpose of reference, the results obtained by using Diaion® WA10 (acryl-type weakly basic resin) and WA30, which are commercially available weakly basic anion exchange resins, are also shown in Table 6.

In Table 6, M-10 (re) is a resin obtained by regenerating M-10 in a wet process after using it for measurement of the respective gas adsorption. Here, the regeneration was conducted in such a manner that the resin having the gas adsorbed, was packed into a column and washed with water in an amount five times by volume of the amount of the resin, and then the amino groups were converted to a free form by passing five times by volume of a 2N NaOH aqueous solution. Then, the resin was washed with water until the eluate became neutral, then dried at 50°C and used for the next gas adsorption test.

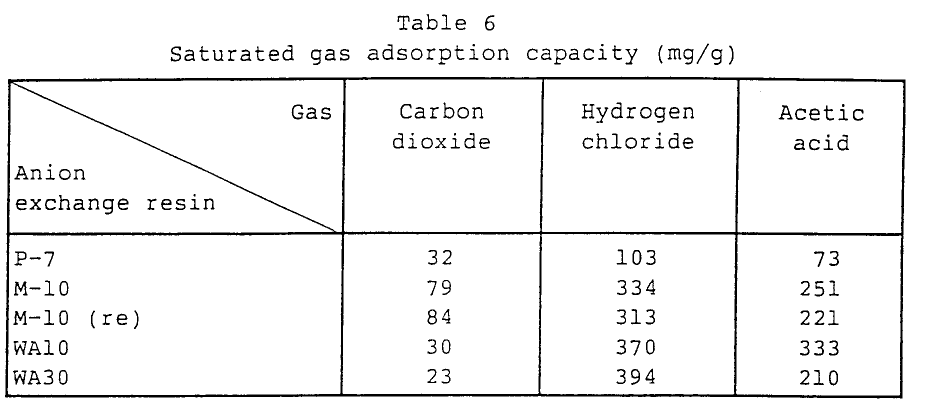

## Claims

1. A process for producing an anion exchange resin being spherical and having the following ion exchange capacity:
(1) an ion exchange capacity of from 8 to 22 meq/g, when amino groups are mainly primary amino groups;
(2) an anion exchange capacity of from 3 to 16 meq/g, when amino groups are mainly secondary or tertiary amino groups; or
(3) a salt splitting capacity of from 1.5 to 8.5 meq/g, when amino groups are mainly quaternary ammonium groups, which comprises dispersing a monomer solution comprising a polymerization initiator and a monomer mixture consisting essentially of from 19 to 98 mol% of N-vinylformamide, from 0.1 to 60 mol% of divinyl benzene and from 0 to 60 mol% of other vinyl compounds copolymerizable therewith, in an organic solvent in which the monomer solution is hardly soluble, in the form of liquid droplets, to form a suspension, heating the suspension to form a crosslinked copolymer of N-vinylformamide with divinylbenzene, hydrolizing the crosslinked copolymer to convert formamide groups to primary amino groups, and when secondary or tertiary amino groups or quaternary ammonium groups are desired as functional groups, methylating or ethylating the primary amino groups.

2. The process according to claim 1, wherein formaldehyde and formic acid or a formate are reacted to the crosslinked copolymer having primary amino groups to obtain an anion exchange resin wherein amino groups are mainly secondary or tertiary amino groups.

3. The process according to claim 1, wherein formaldehyde and formic acid or a formate are reacted to the crosslinked copolymer having primary amino groups to convert the primary amino groups to tertiary amino groups, and then a methyl halide or an ethyl halide is reacted thereto to obtain an anion exchange resin having quaternary ammonium groups.

4. A decoloring method which comprises contacting a solution containing a coloring contaminant, to a spherical anion exchange resin produced by the process of claim 1 and having a structure of a crosslinked copolymer comprising from 40 to 95 mol% of units of N-vinyl amine, amino groups of which may be alkylated by methyl groups or ethyl groups, from 0.1 to 60 mol% of units of divinyl benzene and from 0 to 40 mol% of units of other vinyl compounds copolymerizable therewith, to have the coloring contaminant adsorbed on the resin and thus removed from the solution.

5. The method according to claim 4, wherein the N-vinyl amine units of the anion exchange resin are mainly units of N,N-dimethylvinylamine, and the solution containing a coloring organic contaminant is a sugar solution.

6. A method for removing silica in water, which comprises contacting water containing silica, to a spherical anion exchange resin produced by the process of claim 1 and having a structure of a crosslinked copolymer comprising from 30 to 95 mol% of units of N-vinyl amine, at least a part of amino groups of which are alkylated by methyl groups or ethyl groups, from 0.1 to 40 mol% of units of divinylbenzene and from 0 to 40 mol% of units of other vinyl compounds copolymerizable therewith and having a salt splitting capacity of from 1.5 to 8.5 meq/g, to have silica absorbed on the resin and thus removed from water.

7. A method for removing an acidic component in a gas, which comprises contacting a gas containing an acidic component, to a spherical anion exchange resin produced by the process of claim 1 and having a structure of a crosslinked copolymer comprising mainly from 70 to 97 weight% of units of N-vinyl amine, amino groups of which may be alkylated by methyl groups or ethyl groups, and from 1 to 30 weight% of units of divinylbenzene, to have the acidic component adsorbed on the resin and thus removed from the gas.

## Patentansprüche

1. Verfahren zur Herstellung eines Anionenaustauscherharzes, welches kugelförmig ist und die folgende Ionenaustauschkapazität aufweist:
(1) eine Ionenaustauschkapazität von 8 bis 22 meq/g, wenn Aminogruppen hauptsächlich primäre Aminogruppen sind;
(2) eine Anionenaustauschkapazität von 3 bis 16 meq/g, wenn Aminogruppen hauptsächlich sekundäre oder tertiäre Aminogruppen sind; oder
(3) eine Salzspaltungskapazität von 1,5 bis 8,5 meq/g, wenn Aminogruppen hauptsächlich quaternäre Ammoniumgruppen sind, umfassend das Dispergieren einer Monomerlösung, umfassend einen Polymerisationsinitiator und eine Monomermischung, bestehend im wesentlichen aus 19 bis 98 Mol-% N-Vinylformamid, 0,1 bis 60 Mol-% Divinylbenzol und 0 bis 60 Mol-% weiterer, hiermit co-polymerisierbarer Vinylverbindungen, in einem organischen Lösungsmittel, in welchem die Monomerlösung kaum löslich ist, in Form von Flüssigkeitströpfchen, um eine Suspension zu bilden, Erwärmen der Suspension zur Bildung eines vernetzten Copolymeren aus N-Vinylformamid mit Divinylbenzol, Hydrolysieren des vernetzten Copolymeren, um Formamidgruppen in primäre Aminogruppen umzuwandeln, und wenn sekundäre oder tertiäre Aminogruppen oder quaternäre Ammoniumgruppen als funktionelle Gruppen erwünscht sind, Methylieren oder Ethylieren der primären Aminogruppen.

2. Verfahren nach Anspruch 1, wobei Formaldehyd und Ameisensäure oder ein Formiat mit dem vernetzten Copolymeren mit primären Aminogruppen umgesetzt werden, um ein Anionenaustauscherharz zu erhalten, worin Aminogruppen hauptsächlich sekundäre oder tertiäre Aminogruppen sind.

3. Verfahren nach Anspruch 1, wobei Formaldehyd und Ameisensäure oder ein Formiat mit dem vernetzten Copolymeren mit primären Aminogruppen umgesetzt werden, um die primären Aminogruppen in tertiäre Aminogruppen umzuwandeln, und danach ein Methylhalogenid oder ein Ethylhalogenid hiermit umgesetzt wird, um ein Anionenaustauscherharz mit quaternären Ammoniumgruppen zu erhalten.

4. Entfärbungsverfahren, umfassend das Kontaktieren einer eine färbende Verunreinigung enthaltenden Lösung mit einem kugelförmigen Anionenaustauscherharz, das gemäß dem Verfahren nach Anspruch 1 hergestellt worden ist und eine Struktur aus einem vernetzten Copolymer aufweist, umfassend 40 bis 95 Mol-% Einheiten an N-Vinylamin, dessen Aminogruppen durch Methylgruppen oder Ethylgruppen alkyliert sein können, 0,1 bis 60 Mol-% Einheiten an Divinylbenzol und 0 bis 40 Mol-% an Einheiten weiterer Vinylverbindungen, welche hiermit copolymerisierbar sind, um die färbende Verunreinigung an dem Harz zu adsorbieren und somit aus der Lösung zu entfernen.

5. Verfahren nach Anspruch 4, wobei die N-Vinylamineinheiten des Anionenaustauscherharzes hauptsächlich Einheiten aus N,N-Dimethylvinylamin sind und die eine färbende organische Verunreinigung enthaltende Lösung eine Zuckerlösung ist.

6. Verfahren zur Entfernung von Silika in Wasser, umfassend das Kontaktieren von Silika enthaltendem Wasser mit einem kugelförmigen Anionenaustauscherharz, das gemäß dem Verfahren nach Anspruch 1 hergestellt worden ist und eine Struktur aus einem vernetzten Copolymer aufweist, umfassend 30 bis 95 Mol-% Einheiten an N-Vinylamin, von dem mindestens ein Teil der Aminogruppen durch Methylgruppen oder Ethylgruppen alkyliert sind, 0,1 bis 40 Mol-% Einheiten an Divinylbenzol und 0 bis 40 Mol-% Einheiten weiterer Vinylverbindungen, welche hiermit copolymerisierbar sind, und das eine Salzspaltungskapazität von 1,5 bis 8,5 meq/g aufweist, um Silika auf dem Harz zu adsorbieren und somit aus dem Wasser zu entfernen.

7. Verfahren zur Entfernung einer sauren Komponente in einem Gas, umfassend das Kontaktieren eines eine saure Komponente enthaltenden Gases mit einem kugelförmigen Anionenaustauscherharz. das gemäß dem Verfahren nach Anspruch 1 hergestellt worden ist und eine Struktur aus einem vernetzten Copolymer aufweist, umfassend hauptsächlich 70 bis 97 Gew.-% an Einheiten aus N-Vinylamin, dessen Aminogruppen durch Methylgruppen oder Ethylgruppen alkyliert sein können, und 1 bis 30 Gew.-% Einheiten an Divinylbenzol, um die saure Komponente auf dem Harz zu adsorbieren und somit aus dem Gas zu entfernen.

## Revendications

1. Procédé de fabrication d'une résine échangeuse d'anions de type sphérique et ayant la capacité d'échange d'ions suivante :
(1) une capacité d'échange d'ions de 8 à 22 méq./g, quand les groupes amino sont principalement des groupes amino primaire ;
(2) une capacité d'échange d'anions de 3 à 16 méq./g, quand les groupes amino sont principalement des groupes amino secondaire ou tertiaire ; ou
(3) une capacité de dissociation de sel de 1,5 à 8,5 méq./g, quand les groupes amino sont principalement des groupes ammonium quaternaire,
qui comprend la dispersion d'une solution de monomères comprenant un initiateur de polymérisation et un mélange de monomères se composant essentiellement de 19 à 98 % en moles de N-vinylformamide, de 0,1 à 60 % en moles de divinylbenzène et de 0 à 60 % en moles d'autres composés vinyliques pouvant être copolymérisés avec ceux-ci, dans un solvant organique dans lequel la solution de monomères est difficilement soluble, sous la forme de gouttelettes liquides, pour former une suspension, le chauffage de la suspension pour former un copolymère réticulé de N-vinylformamide avec le divinylbenzène, l'hydrolyse du copolymère réticulé pour convertir les groupes formamide en groupes amino primaire, et quand des groupes amino secondaire ou tertiaire ou des groupes ammonium quaternaire sont souhaités à titre de groupes fonctionnels, la méthylation ou l'éthylation des groupes amino primaire.

2. Procédé selon la revendication 1, dans lequel du formaldéhyde et de l'acide formique ou un formiate sont mis en réaction avec le copolymère réticulé possédant des groupes amino primaire pour obtenir une résine échangeuse d'anions dans laquelle les groupes amino sont principalement des groupes amino secondaire ou tertiaire.

3. Procédé selon la revendication 1, dans lequel du formaldéhyde et de l'acide formique ou un formiate sont mis en réaction avec le copolymère réticulé possédant des groupes amino primaire pour convertir les groupes amino primaire en groupes amino tertiaire, puis un halogénure de méthyle ou un halogénure d'éthyle est mis en réaction avec ceux-ci pour obtenir une résine échangeuse d'anions ayant des groupes ammonium quaternaire.

4. Procédé de décoloration qui comprend la mise en contact d'une solution contenant un contaminant colorant, avec une résine échangeuse d'anions du type sphérique préparée par le procédé selon la revendication 1 et possédant une structure d'un copolymère réticulé comprenant de 40 à 95 % en moles de motifs de N-vinylamine, dont les groupes amino peuvent être alkylés par des groupes méthyle ou des groupes éthyle, de 0,1 à 60 % en moles de motifs de divinylbenzène et de 0 à 40 % en moles de motifs d'autres composés vinyliques pouvant être copolymérisés avec ceux-ci, pour que le contaminant colorant soit adsorbé sur la résine et ainsi éliminé de la solution.

5. Procédé selon la revendication 4, dans lequel les motifs N-vinylamine de la résine échangeuse d'anions sont principalement des motifs de N,N-diméthylvinylamine, et la solution contenant un contaminant organique colorant est une solution de sucre.

6. Procédé d'élimination de la silice contenue dans de l'eau, qui comprend la mise en contact de l'eau contenant la silice avec une résine échangeuse d'anions du type sphérique préparée par le procédé selon la revendication 1 et possédant une structure d'un copolymère réticulé comprenant de 30 à 95 % en moles de motifs de N-vinylamine, dont une partie au moins des groupes amino sont alkylés par des groupes méthyle ou des groupes éthyle, de 0,1 à 40 % en moles de motifs de divinylbenzène et de 0 à 40 % en moles de motifs d'autres composés vinyliques pouvant être copolymérisés avec ceux-ci, et ayant une capacité de dissociation de sel de 1,5 à 8,5 méq./g pour que la silice soit adsorbée sur la résine et ainsi éliminée de l'eau.

7. Procédé d'élimination d'un composé acide contenu dans un gaz, qui comprend la mise en contact d'un gaz contenant un composé acide avec une résine échangeuse d'anions du type sphérique préparée par le procédé selon la revendication 1 et possédant une structure d'un copolymère réticulé comprenant principalement de 70 à 97 % en poids de motifs de N-vinylamine, dont les groupes amino peuvent être alkylés par des groupes méthyle ou des groupes éthyle, et de 1 à 30 % en poids de motifs de divinylbenzène, pour que le composé acide soit adsorbé sur la résine et ainsi éliminé du gaz.
